# EUROPEAN PATENT SPECIFICATION

(11) **EP 2 363 371 B1**
(45) Date of publication and mention of the grant of the patent: **18.06.2014**
(21) Application number: 11156443.1
(22) Date of filing: 01.03.2011
(51) Int. Cl.: F16H 41/26, B66D 1/14, B66D 1/24

(54) **Ship's winch with hydraulic coupling**
Schiffswinde mit hydraulischer Kupplung
Treuil de navire avec couplage hydraulique

(30) Priority: 01.03.2010 NL 2004316
(43) Date of publication of application: 07.09.2011
(73) Proprietor: VME B.V. ( Van Meerwijk Enterprises), 7971 PE Havelte (NL)
(72) Inventor: Zoet, Klaas, 8061 RB Hasselt (NL); van Boven, Johan, 7971 PE Havelte (NL)
(74) Representative: Nederlandsch Octrooibureau

(56) References cited:
- WO-A1-2007/085293
- GB-A- 1 437 433
- JP-A- 2003 214 467
- JP-A- 2009 269 683
- NL-A- 8 204 681
- US-A- 4 062 187
- Anonymous: "True torque Fluid Couplings, Selection Guide 521-110", Falk Corporation , 1 June 2004 (2004-06-01), XP002606128, Milwaukee, Wisconsin Retrieved from the Internet: URL:http://www.kamandirect.com/resources/2 010/downloads/falk_true_torque_fluid_coupl ings.pdf [retrieved on 2010-10-20]

## Description

The present invention relates to a ship's winch according to the preamble of Claim 1.

A structure of this type is known from the Australian patent publication 434584, which describes a frictional coupling arranged between a winch and a hydraulic drive motor.

Particularly in shipping, winches are used for towing and steering all kinds of vessels, platforms and the like. In particular if the distance between a tugboat and a vessel to be steered/towed is relatively small, that is to say the towing or winch cable runs at a relatively steep angle and thus has a significant vertical component, negative effects are produced as a result of the heaving of the water in which the respective vessels are situated.

In this document, the term towing cable or winch cable is understood to mean any type of connection between, for example, a tugboat and a vessel, and this may comprise belts, chains and the like.

As there is a trend to transport freight in ever larger vessels across the world, these ever larger vessels are increasingly often being loaded and unloaded offshore and the circumstances under which they are steered to a mooring place are becoming more and more difficult, such as the height of the waves.

As such waves can reach a height of one to many metres, it is necessary to compensate for the heaving motion. This applies in particular in cases where a towing vessel has to be positioned accurately and it is important that the towing cable is constantly taut without the cable breaking.

US 4,062,187 discloses a hydraulic coupling which is arranged in a wheeled crane, between the lifting motor and the cable drum. In order to prevent an overload from occurring during lifting, a relief valve is present which limits the maximum oil pressure in the hydraulic coupling.

Japanese publication 2009 269683 discloses the use of a hydraulic motor provided with a relief valve on a cable winch. In the publication "True torque Fluid Couplings, Selection Guide 521-110; Falk Corporation", a number of hydraulic couplings are described.

It is an object of the present invention to provide a winch which makes it possible, without requiring special actions, to maintain a taut connection between a vessel to be towed and the towing vessel while, on the other hand, preventing the winch structure from being overloaded, as such an overload can completely destroy the driving winch motor.

This object is achieved with an above-described vessel by the features of Claim 1.

A sensor of this type may be fitted in any possible way. Thus, it is possible to fit it between the frame of the winch and the attachment means situated underneath, such as a deck of a vessel. In addition, it is possible to incorporate it in the bearing block of the shaft of the winch drum. A further possibility is to measure the torque load which is exerted on one of the shafts of the winch.

According to the present invention, the coupling used is a hydraulic coupling. By determining the force on a winch cable by means of a sensor, for example, by measuring the torque which is exerted on the shaft of the winch drum, it is possible, by means of a control circuit controlled by the sensor, to produce a control signal for the power/torque to be transmitted by the coupling. In its simplest embodiment, this may be an on/off signal, that is to say that the moment the winch cable is overloaded, the drive power coming from the drive motor and going to the winch drum can immediately be interrupted.

This can, for example, be achieved by removing the hydraulic fluid between the rotors of the hydraulic coupling. Another possibility is to provide an adjustable guide vane between the rotors. By adjusting the blades thereof, the transmission of force between the rotors can be controlled. In addition, parts which are known per se may also be present in the hydraulic coupling.

By configuring the hydraulic coupling as a torque converter, it is possible to increase (reduce) this force or torque reduction more gradually.

The drive motor used has to be distinguished from the hydraulic coupling. Such a drive motor may be an electrical motor or a diesel (electrical) motor or hydromotor.

By means of the present invention, it is possible for the drive motor of the winch to rotate at a constant speed when correctly adjusted, during the towing / steering /securing of a vessel. By adjusting the force which is transmitted by means of the hydraulic coupling, it is thus possible to always maintain a constant force on the winch cable, even when, during operation, the distance between the towing vessel and the vessel to be towed changes as a result of the heaving of the sea. In the most extreme situation, this can mean that the rotors rotate in opposite directions. This means that when providing assistance to a vessel to be towed, it is hardly necessary for the crew, if at all, to pay attention to the tension of the winch cable, as a substantially constant tension is always ensured.

In addition, this structure makes it possible to prevent the drive motor from overloading. Such a drive motor may comprise any kind of motor, such as an internal combustion engine, electrical motor or hydraulic motor.

By suitably configuring the controller, it is possible, for example, for a captain of one of the vessels who operates the winch according to the present invention to set a "set point", that is to say a desired value of, for example, the load on the towing cable. By means of the controller, the above-described hydrodynamic coupling can be influenced in such a manner that, during operation, this value is constantly approached as much as possible by, for example, supplying / discharging hydraulic fluid and/or adjusting the guide vanes in the above-described manner. As a result thereof, it is possible to ensure a constantly taut towing cable which can absorb significant loads while also automatically absorbing heaving movements and the like.

The present invention can also be used in winches in which large loads have to be displaced across a considerable distance without a counterweight and in which, due to the required braking action, the system can be expected to be overloaded. By means of an above-described hydraulic coupling, it is possible to achieve a braking action, it being possible to rotate the rotors in the opposite direction. Obviously, the hydraulic fluid has to be cooled when it absorbs large amounts of heat for a prolonged period of time. Another example is the lowering of a relatively heavy anchor to a large depth.

Furthermore, the invention relates to a combination of a tugboat and a load, such as a load an anchor, or a further vessel, such as a tanker or any other vessel or platform, which are connected to one another by means of a cable and an above-described winch. In addition, the invention relates to a method for towing such a further vessel by a tugboat as described above and as described in Claim 11.

The present invention will be illustrated in more detail below by means of an exemplary embodiment illustrated in the drawing, in which:
Fig. 1 diagrammatically shows a tugboat and a further vessel connected to one another by means of a towing cable;
Fig. 2 shows the winch illustrated in Fig. 1 in detail;
Fig. 3 shows a first embodiment of the hydraulic coupling used in the winch in detail;
Fig. 4 shows a second embodiment of the hydraulic coupling in detail; and
Figs. 5a, b show a front view of a rotor with adjustable blades in different positions.

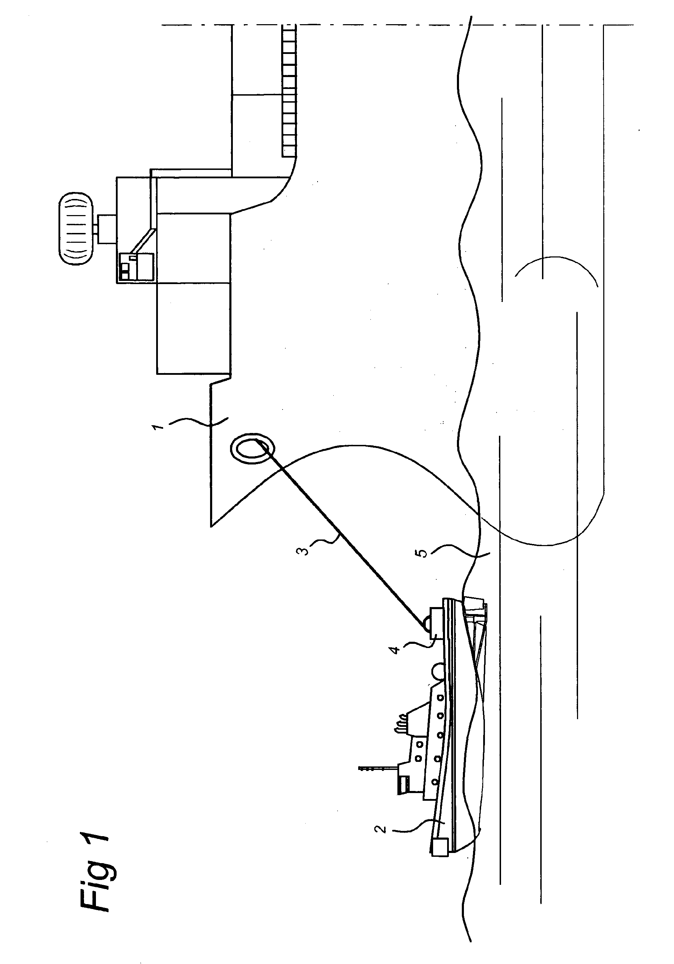

In Fig. 1, a vessel to be towed is denoted by reference numeral 1. This has to be towed and steered by a number of tugboats, one of which is denoted by reference numeral 2. On its deck, this tugboat is provided with a winch 4 according to the invention that is provided with a winch cable 3 which is connected to the vessel 1. The winch cable has to be taut under all circumstances in order to make it possible to accurately position the vessel 1 and to prevent undesired displacements and to be able to exert a tensile force without the cable breaking or relaxing. On the other hand, the water 5 in question is subject to significant heaving, as a result of which the distance between the tugboat 2 and the vessel 1 to be towed varies constantly. In the prior art, this problem was overcome by making a part of the towing cable elastic or by providing a resilient part parallel to the part of the towing cable in order to compensate for the heaving movements and the like.

According to the invention, this problem is solved by means of a winch 4 according to the invention, the details of which can be seen in the other figures.

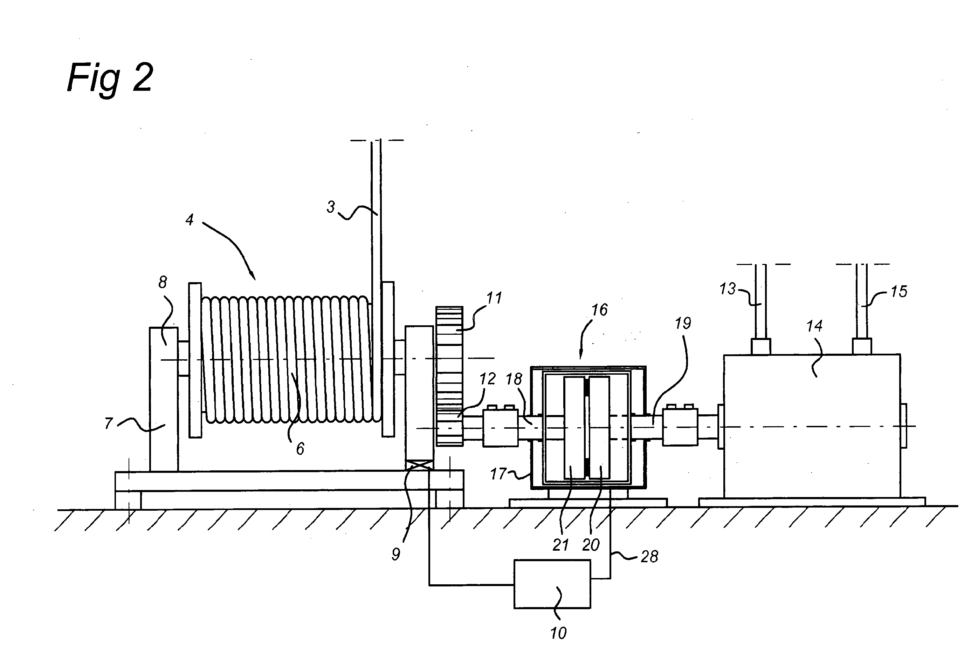

Fig. 2 shows the winch 4 comprising a cable drum or winch drum 6 onto which the cable 3 is wound. The winch drum is held in a frame 7 by means of its shaft 8. This frame 7 is attached to the deck by means of fastening means which are not shown in detail here and a force sensor 9, such as a load cell, is incorporated in the connection to the vessels deck.

On the other side, the winch drum is coupled, via the shaft 8, to a large gearwheel 11 which is in mating engagement with the pinion 12. Pinion 12 is connected to the output shaft 18 of a hydrodynamic coupling 16. The input shaft thereof is denoted by reference numeral 19 and is coupled to a drive motor 14 which, in this case, is configured as a hydraulic motor with supply and return lines 13 and 15.

The sensor 9 is connected to a control unit 10 which can influence the operation of the hydraulic coupling 16 via a control line 28. This can be achieved in a variety of ways.

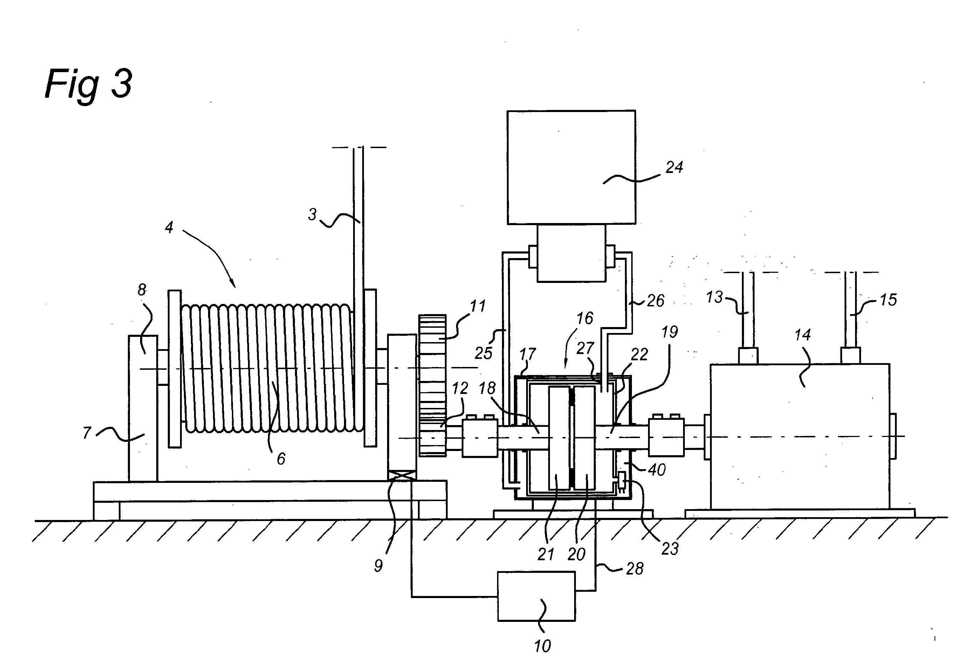

Fig. 3 shows a first possibility. The hydrodynamic coupling 16 is held in a coupling housing 17 which contains hydraulic fluid 40. Inside the coupling housing 17, a rotor housing 22 is arranged inside which the driving rotor 20 connected to the shaft 19 is present as well as the driven rotor 21 connected to the shaft 18. It is possible to supply hydraulic fluid to the rotor housing 22 via a pump 24 with inlet 25 and outlet line 26 which ends at inlet 27 of rotor housing 22. An electrically actuable valve 23 is present by means of which fluid can be passed from the rotor housing 22 into the coupling housing 17.

The above-described structure operates as follows. If, with the situation according to Fig. 1, the tugboat 2 moves to a wave trough from the illustrated position, the load on winch cable 3 becomes so great that this is sensed by sensor 9 and a signal is emitted to the control unit 10. Subsequently, valve 23 is opened via line 28, as a result of which hydraulic fluid is displaced from the rotor housing 22 and the transmission of force between the driving rotor 20 and driven rotor 21 is reduced.

As soon as the force on cable 3 is reduced, this is detected by sensor 9 and the control unit will be controlled in such a manner that the pump 24 is driven, as a result of which the rotor housing 22 is filled again via inlet 27 and the transmission of force between the rotors 21 and 20 increases. In this way, the cable can be paid out when the vessel 2 moves from a wave crest to a wave trough while remaining taut. As soon as the vessel 2 moves back from a trough to a crest, the winch cable will start to be wound up. When paying out the winch cable 3, the rotors 20 and 21 will rotate in the opposite direction. In principle, it is possible to allow the hydraulic coupling to operate as a torque converter, resulting in an increase in the torque when the output shaft 18 moves at low speeds. In addition, it is possible, in principle, to allow the drive motor 14 to operate at a constant speed.

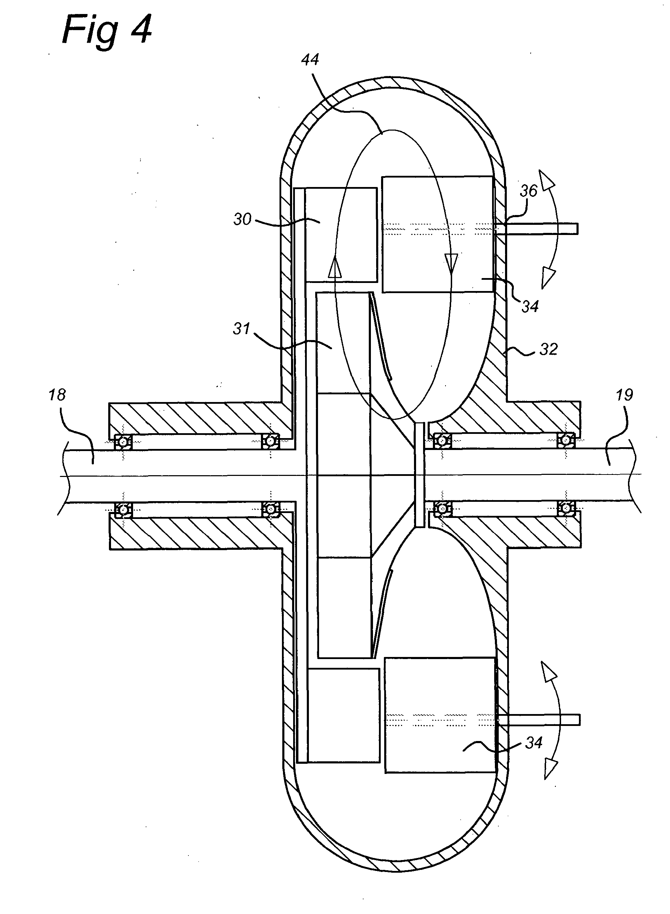

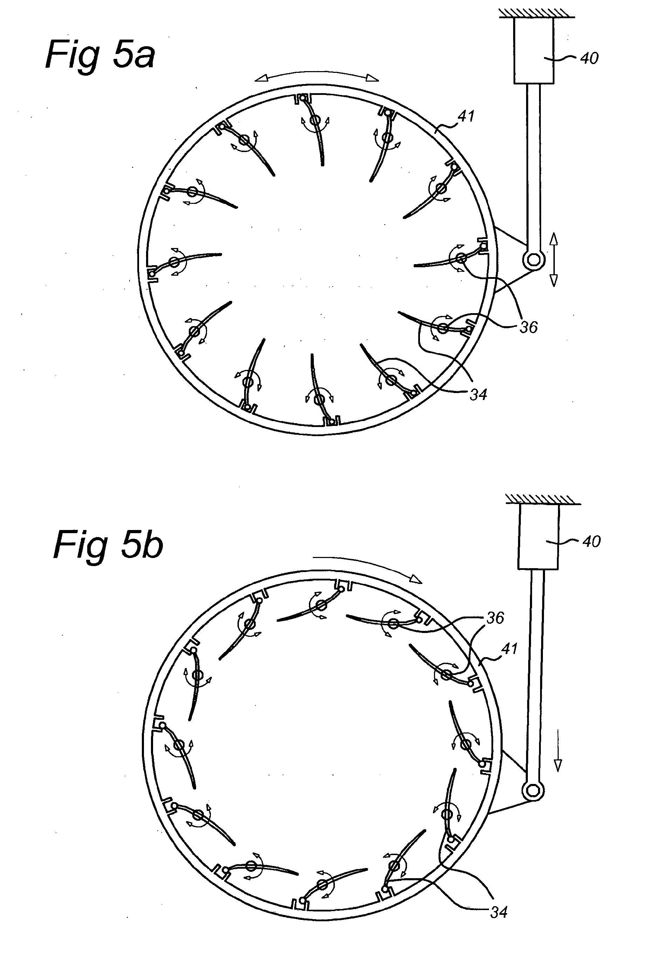

Fig. 4 shows a detail of a variant of the structure according to Fig. 3. Similar parts are provided with the same reference numerals. A rotor housing 32 is provided on the input shaft 19 in a stationary manner. The rotor housing contains a rotor 31 which is rigidly coupled to the input shaft 19. The output shaft 18 is provided with a rotor 30 which is fixedly connected thereto. A number of guide vanes 34, which can be actuated simultaneously, are rotatably arranged about a shaft 36. Further details thereof can be seen in Fig. 5a and Fig. 5b which also show the actuator 40 which is used and which can adjust the vanes 34 via a ring 41.

When driving the shaft 19, the rotor 31 or the pump wheel generate a centrifugal flow to the outside as a result of which the other rotor 30 or the wheel to be operated is driven and shaft 18 rotates. This produces a fluid flow as is indicated by means of arrow 44. By adjusting the vanes 34, this fluid flow can be stimulated or blocked. The position shown in Fig. 5a shows the free flow, while Fig. 5b shows the blocked flow.

Upon reading the above, those skilled in the art will immediately be able to think of further variants for adjusting the efficiency of the hydrodynamic coupling 16. In addition, it should be understood that the winch has many other uses, some examples of which have been described above.

## Claims

1. Vessel comprising a winch (4) with a frame (7), a winch drum (6) which has a shaft (8) and is accommodated in said frame (7), a drive for said shaft, comprising a drive motor (14) and a coupling (16) which is arranged between said drive motor (14) and said cable drum shaft, **characterized in that** said coupling (16) is a hydraulic coupling, with rotors (20, 21; 30, 31) which are arranged on the output shaft (18) and the input shaft (19) and provided with vanes (35) and which are accommodated in a rotor housing (22) attached to the deck of said vessel, wherein the driven rotor (21, 31), due to the presence of a hydraulic fluid, is displaced without contact being made with the driving rotor (20, 30) by said driving rotor, and wherein a load-measuring sensor (9) is present which determines the force exerted on the cable drum (6) by a cable (3) and is connected to a control unit (10), wherein, when an overload is measured by said sensor (9), said control unit (10) turns on a controller which is connected thereto in order to reduce the torque transfer between said rotors (20, 21).

2. Vessel according to Claim 1, wherein said control unit (10) is configured in such a manner that the torque transfer is reduced by at least 80%.

3. Vessel according to one of the preceding claims, wherein said control unit is configured in such a manner that said rotors (20, 21) rotate in the opposite direction in case of overload.

4. Vessel according to one of the preceding claims, wherein said control comprises a valve (23) which is present in said rotor housing (22) and which can be opened for discharging hydraulic fluid between said rotors.

5. Vessel according to one of the preceding claims, wherein the coupling comprises rotor blades (34) which are arranged so as to be adjustable in order to influence the fluid flow between the rotors (30, 31), wherein said control comprises an adjustment of said blades (34) to a position where the torque transfer between said rotors is reduced.

6. Vessel according to one of the preceding claims, wherein said drive motor (14) is a hydromotor.

7. Vessel according to one of the preceding claims, wherein said hydraulic coupling is a torque converter.

8. Assembly comprising a vessel according to one of the preceding claims, and a load (1) which is connected to the winch (4) and can be moved independently from said vessel, wherein said load-measuring sensor (9) is configured in such a manner that the load peaks caused by the swell in the connection between said load (1) and said winch drum (6) are compensated for by lengthening or shortening said connection, respectively.

9. Assembly according to Claim 8, wherein said load comprises an anchor.

10. Assembly according to Claim 8 or 9, wherein said load comprises a further vessel (1).

11. Method for displacing a load (1) by a tugboat (2), comprising providing a vessel (2) according to one of Claims 1-7, connecting said vessel to said load by means of a connection (3), constantly operating said drive motor (14) and compensating for the heaving motion between said vessel and said load via said sensor (9) by increasing or reducing the slip between said rotors (20, 21; 30, 31) while keeping the force in said connection substantially the same.

12. Method according to Claim 11, wherein said control is such that, when the load on said cable (3) becomes excessively high, said rotors (20, 21; 30, 31) rotate in the opposite direction.

13. Method according to one of Claims 11 or 12, wherein a substantially constant force is continuously being exerted on said winch cable (3).

## Patentansprüche

1. Wasserfahrzeug umfassend eine Winde (4) mit einem Rahmen (7), einer Windentrommel (6), die eine Achse (8) aufweist und in dem Rahmen (7) untergebracht ist, einem Antrieb für die Achse, umfassend einen Antriebsmotor (14) und eine Kupplung (16), die zwischen dem Antriebsmotor (14) und der Seiltrommelachse angeordnet ist, **dadurch gekennzeichnet, dass** die Kupplung (16) eine hydraulische Kupplung ist mit Rotoren (20, 21; 30, 31), die auf der Ausgangsachse (18) und der Eingangsachse (19) angeordnet sind und mit Flügeln (35) ausgestattet sind und die in einem Rotorgehäuse (22) untergebracht sind, das mit dem Deck des Wasserfahrzeugs befestigt ist, wobei der angetriebene Rotor (21, 31) durch die Anwesenheit eines Hydraulikfluids ohne Kontaktherstellung mit dem Antriebsrotor (20, 30) durch den Antriebsrotor verlagert wird, und wobei ein Last-messender Sensor (9) vorgesehen ist, der die durch ein Seil (3) auf die Seiltrommel (6) ausgeübte Kraft bestimmt und mit einer Steuerungseinheit (10) verbunden ist, wobei die Steuerungseinheit (10) ein damit verbundes Steuerungsgerät anschaltet, um die Drehmomentübertragung zwischen den Rotoren (20, 21) zu reduzieren, wenn der Sensor eine Überlastung misst.

2. Wasserfahrzeug nach Anspruch 1, wobei die Steuerungseinheit (10) so eingestellt ist, dass die Drehmomentübertragung um mindestens 80% reduziert wird.

3. Wasserfahrzeug nach einem der vorhergehenden Ansprüche, wobei die Steuerungseinheit so eingestellt ist, dass die Rotoren (20, 21) im Falle einer Überlastung in die entgegengesetzte Richtung rotieren.

4. Wasserfahrzeug nach einem der vorhergehenden Ansprüche, wobei die Steuerung ein Ventil (23) umfasst, das in dem Rotorgehäuse (22) vorgesehen ist und das zum Ablassen von Hydraulikfluid zwischen den beiden Rotoren geöffnet werden kann.

5. Wasserfahrzeug nach einem der vorhergehenden Ansprüche, wobei die Kupplung Rotorblätter (34) umfasst, die so angeordnet sind, dass sie einstellbar sind, um den Fluidfluss zwischen den Rotoren (30, 31) zu beeinflussen, wobei die Steuerung ein Einstellen der Rotorblätter (34) in eine Position umfasst, in der die Drehmomentübertragung zwischen den Rotoren reduziert ist.

6. Wasserfahrzeug nach einem der vorhergehenden Ansprüche, wobei der Antriebsmotor (14) ein Hydromotor ist.

7. Wasserfahrzeug nach einem der vorhergehenden Ansprüche, wobei die hydraulische Kupplung ein Drehmomentwandler ist.

8. Aufbau umfassend ein Wasserfahrzeug nach einem der vorhergehenden Ansprüche und eine Last (1), die mit der Winde (4) verbunden ist und unabhängig vom Wasserfahrzeug bewegt werden kann, wobei der Last-messende Sensor (9) derart eingerichtet ist, dass die durch den Seegang verursachten Spitzenbelastungen in der Verbindung zwischen der Last (1) und der Windentrommel (6) durch eine Verlängerung bzw. eine Verkürzung der Verbindung kompensiert werden.

9. Aufbau nach Anspruch 8, wobei die Last einen Anker umfasst.

10. Aufbau nach Anspruch 8 oder 9, wobei die Last ein weiteres Wasserfahrzeug umfasst (1).

11. Verfahren zum Verlagern einer Last (1) durch einen Schlepper (2), umfassend Bereitstellung eines Wasserfahrzeugs nach einem der Ansprüche 1 bis 7, Verbinden des Wasserfahrzeugs mit der Last mittels einer Verbindung (3), kontinuierliches Betreiben des Antriebsmotors (14) und Kompensation der Hebebewegung zwischen dem Wasserfahrzeug und der Last mittels des Sensors (9) durch Erhöhung oder Reduzierung des Schlupfs zwischen den Rotoren (20, 21; 30, 31), während die Kraft in der Verbindung im wesentlichen gleich gehalten wird.

12. Verfahren nach Anspruch 11, wobei die Steuerung so erfolgt, dass die Rotoren (20, 21; 30, 31) in die entgegengesetzte Richtung rotieren, wenn die Last auf das Seil (3) übermäßig groß wird.

13. Verfahren nach Anspruch 11 oder 12, wobei im wesentlichen eine konstante Kraft auf das Windenseil (3) ausgeübt wird.

## Revendications

1. Navire comprenant un treuil (4) comportant un cadre (7), un tambour (6) de treuil qui possède un arbre (8) et est logé dans ledit cadre (7), un organe d'entraînement pour ledit arbre, comprenant un moteur d'entraînement (14) et un organe d'accouplement (16) qui est agencé entre ledit moteur d'entraînement (14) et ledit arbre de tambour de câble, **caractérisé en ce que** ledit organe d'accouplement (16) est un organe d'accouplement hydraulique, doté de rotors (20, 21 ; 30, 31) qui sont agencés sur l'arbre de sortie (18) et sur l'arbre d'entrée (19) et pourvus d'aubes (35) et qui sont logés dans un carter (22) de rotor fixé au pont dudit navire, dans lequel le rotor entraîné (21, 31), en raison de la présence d'un fluide hydraulique, est déplacé sans établir de contact avec le rotor d'entraînement (20, 30) par ledit rotor d'entraînement, et dans lequel un capteur (9) de mesure de charge est présent, lequel détermine la force exercée sur le tambour (6) de câble par un câble (3) et est raccordé à une unité de commande (10), dans lequel, lorsqu'une surcharge est mesurée par ledit capteur (9), ladite unité de commande (10) active un dispositif de commande qui y est raccordé afin de réduire le transfert de couple entre lesdits rotors (20, 21).

2. Navire selon la revendication 1, dans lequel ladite unité de commande (10) est configurée d'une manière telle que le transfert de couple est réduit d'au moins 80 %.

3. Navire selon l'une des revendications précédentes, dans lequel ladite unité de commande est configurée d'une manière telle que lesdits rotors (20, 21) tournent dans la direction opposée en cas de surcharge.

4. Navire selon l'une des revendications précédentes, dans lequel ladite commande comprend un clapet (23) qui est présent dans ledit carter (22) de rotor et qui peut s'ouvrir pour rejeter le fluide hydraulique entre lesdits rotors.

5. Navire selon l'une des revendications précédentes, dans lequel l'organe d'accouplement comprend des aubes (34) de rotor qui sont agencées de manière à pouvoir être réglées afin d'influer sur l'écoulement de fluide entre les rotors (30, 31), dans lequel ladite commande comprend un réglage desdites aubes (34) dans une position où le transfert de couple entre lesdits rotors est réduit.

6. Navire selon l'une des revendications précédentes, dans lequel ledit moteur d'entraînement (14) est un hydromoteur.

7. Navire selon l'une des revendications précédentes, dans lequel ledit organe d'accouplement hydraulique est un convertisseur de couple.

8. Ensemble comprenant un navire selon l'une des revendications précédentes, et une charge (1) qui est raccordée au treuil (4) et peut être déplacée indépendamment dudit navire, dans lequel ledit capteur (9) de mesure de charge est configuré d'une manière telle que les pics de charge provoqués par la houle dans le raccord entre ladite charge (1) et ledit tambour (6) de treuil sont compensés par l'allongement ou le raccourcissement dudit raccord, respectivement.

9. Ensemble selon la revendication 8, dans lequel ladite charge comprend une ancre.

10. Ensemble selon la revendication 8 ou 9, dans lequel ladite charge comprend un autre navire (1).

11. Procédé de déplacement d'une charge (1) par un remorqueur (2), comprenant l'utilisation d'un navire (2) selon l'une des revendications 1 à 7, le raccordement dudit navire à ladite charge à l'aide d'un raccord (3), le fonctionnement constant dudit moteur d'entraînement (14) et la compensation du mouvement de soulèvement entre ledit navire et ladite charge par le biais dudit capteur (9) en augmentant ou en réduisant le glissement entre lesdits rotors (20, 21 ; 30, 31) tout en maintenant sensiblement la même force dans ledit raccord.

12. Procédé selon la revendication 11, dans lequel ladite commande est telle que, lorsque la charge exercée sur ledit câble (3) devient excessivement élevée, lesdits rotors (20, 21 ; 30, 31) tournent dans la direction opposée.

13. Procédé selon l'une des revendications 11 ou 12, dans lequel une force sensiblement constante est exercée en continu sur ledit câble (3) de treuil.
